# EUROPÄISCHE PATENTSCHRIFT

(11) **EP 2 372 238 B1**
(45) Veröffentlichungstag und Bekanntmachung des Hinweises auf die Patenterteilung: **15.01.2014**
(21) Anmeldenummer: 11158517.0
(22) Anmeldetag: 16.03.2011
(51) Int. Cl.: F21V 23/04, H05B 37/02, G08B 13/19, G08B 13/189, G08B 13/191

(54) **Bewegungssensorgesteuerte Leuchtenvorrichtung sowie Bewegungssensorvorrichtung**
Motion sensor controlled light device and motion sensor device
Dispositif d'éclairage commandé par capteur de mouvement et dispositif de capteur de mouvement

(30) Priorität: 01.04.2010 DE 102010013920
(43) Veröffentlichungstag der Anmeldung: 05.10.2011
(73) Patentinhaber: Steinel GmbH, 33442 Herzebrock (DE)
(72) Erfinder: Möller, Thomas, 32049, Herford (DE)
(74) Vertreter: Behrmann, Niels

(56) Entgegenhaltungen:
- EP-A2- 0 899 701
- WO-A2-2006/026409
- DE-A1- 19 917 109
- US-A- 5 293 097
- US-B1- 6 466 826

## Beschreibung

Die vorliegende Erfindung betrifft eine bewegungssensorgesteuerte Leuchtenvorrichtung nach dem Oberbegriff des Hauptanspruchs sowie eine Bewegungssensorvorrichtung nach dem Oberbegriff des unabhängigen Anspruchs 8, wie sie aus der US 5,293,097 bekannt ist.

Vorrichtungen sind zum Zweck der automatischen Beleuchtungssteuerung als Reaktion auf eine erfasste Bewegung allgemein bekannt, werden aber auch für sonstige Bewegungs-Detektionszwecke, etwa im Zusammenhang mit Alarmsystemen od.dgl. eingesetzt. Solche Vorrichtungen, typischerweise integriert in einem gemeinsamen Gehäuse für die Beleuchtungseinheit sowie die Sensoreinheit, alternativ auch mit einer separaten Sensoreinheit, welche dann zum Aktivieren bzw. Deaktivieren einer davon getrennten Beleuchtungseinheit beschaltet ist, werden sowohl im Innen- als auch Außenbereich verwendet und weisen typischerweise hochfrequenzbasierte Sensoren als Sensormittel auf (sogenannter Radar-Sensoren), alternativ, und weit verbreitet, auf der Basis von Infrarotsignalen wirkende Bewegungssensoren (sogenannte PIR-Sensoren, PIR = Passiv-Infrarot).

All diesen Einheiten ist gemeinsam, dass diese in einem (z.B. durch eine geeignete Optik bei einem Infrarot-Sensor bzw. Antennenstruktur bei einem Hochfrequenzsensor) bestimmten Erfassungsbereich eine Bewegungsdetektion durchführen, etwa auf der Basis eines Dopplereffekts bei einem Radarsensor oder einer (relativen) IR-Signalveränderung bei einem infrarotempfindlichen Detektor. Diese Technologien sind seit langem bekannt.

Eine Herausforderung ist dabei stets eine zuverlässige Reichweiteneinstellung, da einerseits ein ein Aktivieren derartiger Vorrichtungen bewirkender Erfassungsbereich groß genug sein sollte, um zuverlässig eine sich dort bewegende Person zu erfassen (um dann daraufhin etwa Licht zu aktivieren), andererseits sollte der Erfassungsbereich abgegrenzt genug sein, um etwa das unbeabsichtigte Aktivieren durch entfernte Ereignisse (etwa vorbeifahrende Kraftfahrzeuge außerhalb eines durch den Erfassungsbereich abgedeckten Garagenbereichs) auszuschließen. Problematisch dabei ist vor allem der Umstand, dass der Erfassungsbereich, im Hinblick auf Erfassungsobjekte, größenabhängig ist, d.h. ein in einem größeren Abstand vorbeifahrender LKW wird möglicherweise ein vergleichbares Erfassungssignal erzeugen wie eine sich im Nahbereich bewegende Person. Durch ansonsten bekannte Technologien der (typischerweise dann digitalen) Signalverarbeitung wird mit diesen Problemen umgegangen.

Gleichzeitig enthalten bekannte sensorgesteuerte Leuchtenvorrichtungen bzw. Sensoreinheiten typischerweise manuell betätigbare Einstellmittel in Form von Stellrädern od.dgl., mit welchen eine Anpassung an Bedingungen am Einbau- bzw. Installationsort vorgenommen werden kann. Typischerweise wird durch eine derartige manuelle Einstellung der Erfassungsbereich verändert, wobei dies etwa durch das Verändern einer Ansprechempfindlichkeit der Sensormittel in ansonsten bekannter Weise geschieht. Zusätzliche, typischerweise vorhandene Einstellmittel betreffen dann eine (Mindestens-) Einschaltzeit nach einem sensorgesteuerten Aktivieren bzw. eine Lichtschwelle für eine Umgebungshelligkeit, unterhalb welcher überhaupt erst eine Lichtaktivierung erfolgt.

Im Stand der Technik hat es sich dabei als nachteilig herausgestellt, dass eine einmal vorgenommene Empfindlichkeitseinstellung der Sensormittel (also eine Einstellung eines damit erreichbaren Erfassungsbereichs) zwar zum Aktivieren der Beleuchtung führt, sobald eine Zielperson sich in dem eingestellten Erfassungsbereich bewegt. Ein Stillstehen bzw. eine relative Unbeweglichkeit der Zielperson im Erfassungsbereich kann dann jedoch nachteilig dazu führen, dass die Beleuchtung (nach Ablauf der Mindest-Einschaltdauer) wieder erlischt, da die Sensormittel keine zum (erneuten bzw. kontinuierlichen) Ansprechen ausreichende Bewegung der Zielperson detektieren.

Dies führt dann zu unbeabsichtigten Fehlschaltungen, mit möglichen nachteiligen Auswirkungen auf die Produktakzeptanz derartiger Sensorvorrichtungen bei Nutzern.

Ein möglicher Lösungsweg besteht darin, die in der vorbeschriebenen Weise vorgenommene Bewegungserfassung (etwa basierend auf dem Dopplereffekt bei Hochfrequenz-Sensoren) zu ersetzen durch tatsächliche "Anwesenheitssensoren", also etwa bildgebende Verfahren, welche auch stillstehende Objekte im Erfassungsbereich zuverlässig erkennen (etwa in ansonsten bekannter Weise durch Vergleich mit einem Erfassungsbereich ohne Zielobjekt). Derartige Sensoren sind jedoch konstruktiv und im Hinblick auf die Hardware-Erfordernisse aufwändig, damit kostenträchtig und eignen sich entsprechend weniger für breite, auf Großserienanwendungen ausgerichtete Consumer-Anwendungen, wie dies bei sehr kostengünstig herzustellenden Bewegungssensoren der Fall ist.

Ein weiterer Lösungsweg ist in der als gattungsbildend herangezogenen US 5,293,097 offenbart.

Aufgabe der vorliegenden Erfindung ist es daher, eine gattungsgemäße bewegungssensorgesteuerte Leuchtenvorrichtung bzw. eine gattungsgemäße Bewegungssensorvorrichtung im Hinblick auf ihr Betriebsverhalten bei im Erfassungsbereich befindlichen Zielobjekten weiter zu verbessern.

Die Aufgabe wird durch die bewegungssensorgesteuerte Leuchtenvorrichtung mit den Merkmalen des Hauptanspruchs bzw. die Bewegungssensorvorrichtung mit den Merkmalen des unabhängigen Patentanspruchs 8 gelöst. Vorteilhafte Weiterbildungen sind in den Unteransprüchen beschrieben.

In erfindungsgemäß vorteilhafter Weise sind den Sensormitteln Einstellmittel zugeordnet, welche so ausgebildet sind, dass als Reaktion auf das Aktivieren der Beleuchtungseinheit (bzw. des Erzeugen eines entsprechenden Aktivierungssignals) der Erfassungsbereich der Sensormittel erweitert bzw. vergrößert wird, und/oder eine Ansprechempfindlichkeit der Sensormittel vorbestimmt und gezielt erhöht wird.

Dies hat die vorteilhafte Wirkung, dass bei Aktivierung durch die Sensormittel (d.h. als Reaktion auf die Feststellung, dass sich ein Zielobjekt im Erfassungsbereich befindet und planmäßig die Aktivierung erfolgen soll) nunmehr die Empfindlichkeit (Sensitivität) der Sensormittel so erhöht wird, dass selbst kleinere Bewegungen des Zielobjekts im Erfassungsbereich (welche normalerweise keine -- weitere - Aktivierung auslösen würden) gleichwohl eine Sensormittelreaktion auslösen, mit anderen Worten, die Sensormittel nicht etwa nach Ablauf einer vorbestimmten Mindest-Einschaltzeit ein Deaktivierungssignal erzeugen bzw. die Beleuchtungseinheit deaktivieren, vielmehr diese fortgesetzt aktiviert lassen. Dies bringt dann, wie vorstehend erläutert, eine einfache und kostengünstige Lösung des Problems, ein unbeabsichtigtes Deaktivieren bei nach wie vor im Erfassungsbereich befindlichen Zielobjekten (die sich allerdings weniger bewegen) zu verhindern.

Im Rahmen der vorliegenden Erfindung ist dies vorteilhaft dadurch erreicht, dass das Erweitern bzw. Vergrößern des Erfassungsbereichs (bzw. der Ansprechempfindlichkeit, welche insoweit dieselbe Wirkung besitzt) automatisch und ohne manuellen Eingriff erfolgt. Zwar ist, zur Anpassung an verschiedene Einsatzzwecke, weiterbildungsgemäß vorgesehen, dass eine Bedienperson etwa einen Hub (ein Ausmaß der Veränderung) des Erweiterns bzw. Vergrößerns geeignet einstellen kann, entweder durch das Vorwählen beider Schwellen oder das Vorgeben der Differenz, die eigentliche Veränderung geschieht jedoch automatisch, getriggert lediglich durch das Aktivierungssignal der Sensormittel bzw. das Aktivieren der Leuchtmittel.

Damit entsteht der vorteilhafte Effekt, dass ohne die Notwendigkeit eines manuellen Eingriffs der Steuer- und damit der Betriebskomfort von Leuchteneinrichtungen deutlich erhöht werden kann; gleichzeitig ist die vorliegende Erfindung, wie sich aus dem nebengeordneten Patentanspruch 8 ergibt (und auf welchen dann die Weiterbildungen gemäß der abhängigen Patentansprüche 2 bis 7 analog anwend- bzw. anpassbar sind) für beliebige Anwendungen auch außerhalb der Beleuchtungstechnik, etwa im Zusammenhang mit Alarmsystemen, Überwachungssystem oder anderen bewegungsgesteuerten Einsatzgebieten, vorgesehen und geeignet.

In der praktischen Realisierung ist die vorliegende Erfindung weiterbildungsgemäß zum Realisieren eines durch zwei Erfassungsschwellen beschreibbaren, entsprechend unterschiedlich vergrößerten bzw. aufgeweiteten Erfassungsbereichs definiert. Diese Erfassungsschwellen, geeignet elektronisch korrespondierend voreingestellten bzw. elektronisch automatisiert einstellbaren Empfindlichkeitsstufen, bewirken dann automatisch die erfindungsgemäße Sensitivitätserhöhung im Einschalt- bzw. Aktivierungszustand, ebenso wie die weiterbildungsgemäß im Rahmen der Erfindung vorgesehene Absenkung auf eine ursprüngliche Schwelle (entsprechend einem ursprünglichen kleineren Erfassungsbereich, korrespondierend auf einer entsprechend niedrigeren Ansprechschwelle) bei (erneut) deaktivierter Vorrichtung, also etwa nach dem Wieder-Erlöschen der Beleuchtungseinheit.

Dabei ist es einerseits von der Erfindung umfasst und bevorzugt, die Sensormittel als Hochfrequenz- bzw. Mikrowellensensoren vorzusehen, also etwa als CW- oder getaktete Doppler-Vorrichtungen, welche in ansonsten bekannter Weise Bewegungen von Zielobjekten im Erfassungsbereich detektieren. Ergänzend oder alternativ können die Sensormittel ansonsten bekannte Infrarotsensoren, typischerweise realisiert mit Hilfe sogenannter PIR-Detektoren, aufweisen. Für jede dieser Sensormittel ist es bekannt, etwa mittels Einstellung einer elektronischen Verstärkung die Empfindlichkeit (Sensitivität) auf Bewegung zu verändern, was im Rahmen der vorliegenden Erfindung gezielt ausgenutzt wird.

Die Erfindung sieht zudem vor, dass eine intelligente Verknöpfung hergestellt wird zu weiteren, typischerweise an derartigen Beleuchtungsvorrichtungen bzw. Sensoren vorzunehmenden Einstellungen. So hat es sich erfindungsgemäß als sinnvoll und vorteilhaft erwiesen, das erfindungsgemäße Erhöhen bzw. Vergrößern des Erfassungsbereichs (bzw. der Ansprechempfindlichkeit) abhängig zu machen von einer manuell voreingestellten (minimalen) Einschaltzeit. So würde etwa, gemäß einer praktischen Realisierungsform der Erfindung und bei typischer Anwendung in einem begrenzten Innenraum -- typische Anwendung Sanitärraum -- eine Voreinstellung einer kurzen Einschaltzeit in Verbindung mit einer manuell vorgewählten geringen Reichweite zu einer (relativ) starken Erhöhung der Reichweite als Reaktion auf das Aktivieren im Wege der Erfindung führen, während etwa eine lange Einschaltzeit eine im Vergleich dazu geringere Erhöhung der Reichweite gemäß der Erfindung bewirken würde.

Im Ergebnis stellt die vorliegende Erfindung eine intelligente Weiterentwicklung bekannter Bewegungssensortechnologien zur Lichtautomation und andere Anwendungen dar, mit lediglich geringem zusätzlichem Hardware-Aufwand signifikante Funktionsverbesserungen im praktischen Betrieb zu gewährleisten und das aus Nutzersicht teilweise lästige unerwünschte Abschalten von sensorgesteuerten Beleuchtungen zu verhindern, während sich eine Zielperson noch im Erfassungsbereich befindet.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

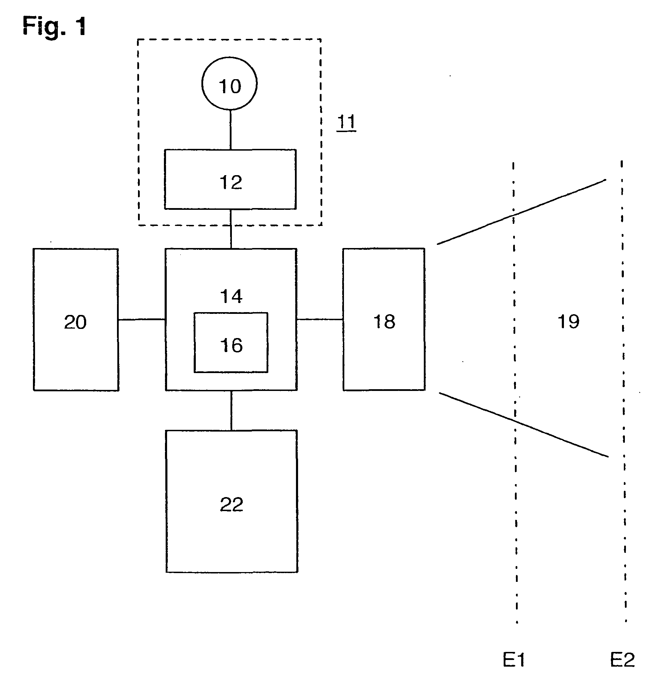

- Fig. 1:: ein schematisches Blockschaltbild einer bewegungsgesteuerten Leuchtenvorrichtung gemäß einer ersten Ausführungsform der vorliegenden Erfindung.

Das Blockschaltbild der Fig. 1 verdeutlicht in schematischer Form die wesentlichen Funktionskomponenten einer solchen sensorgesteuerten Leuchtenvorrichtung. In ansonsten bekannter Weise, und gezeigt durch die gestrichelte Umrandung 11, wird ein Leuchtmittel 10 von einer geeignet zugeordneten Treiber- bzw. Steuerschaltung 12 als Reaktion auf das Ansteuersignal einer zentralen Steuereinheit 14 geeignet aktiviert oder deaktiviert (bzw. in einen geeignet einstellbaren Zwischen-(Dimm-) Zustand versetzt).

Die zentrale Steuereinheit 14, in ansonsten bekannter Weise, empfängt das Sensor-Ausgangssignal einer Sensoreinheit 18, etwa eines Hochfrequenz-Dopplersensors, aktiviert typischerweise durch eine Bewegung eines sich im Erfassungsbereich 19 vor der Sensoreinheit 18 oberhalb einer Empfindlichkeitsschwelle bewegenden Zielperson. Eine manuell bestätigbare Einzeleinheit 20 für die zentrale Steuereinheit 14 gibt geeignete, voreinstellbare Parameter vor, wie etwa eine minimale Einschaltdauer der Beleuchtungseinheit 11 nach dem Aktivieren, eine Umgebungs-Helligkeitsschwelle (sofern ein geeigneter Helligkeitssensor vorhanden ist) und/oder eine Ansprechempfindlichkeit, entsprechend einer initialen Reichweite der Sensoreinheit 18, z.B. entsprechend der Ebene E1 vor der Sensoreinheit 18, welche exemplarisch den Erfassungsbereich für diesen Betriebszustand auf Bewegungen links von dieser Linie begrenzt.

Im Rahmen von Ausgestaltungen der vorliegenden Erfindung weist die gezeigte Anordnung zusätzlich Einstellmittel 16 als Funktionskomponente der zentralen Steuereinheit 14 auf, welche in erfindungsgemäß vorteilhafter Weise als Reaktion auf das Erfassen eines Zielobjekts durch die Sensoreinheit 18 bzw. ein Aktivieren der Beleuchtungseinheit 11 als Reaktion darauf eine gezielte, automatische Verschiebung der Ansprechempfindlichkeit der Sensoreinheit 18 (und damit des Erfassungsbereichs) in Richtung auf die rechte Schwelle E2 bewirken: Dies führt dazu, dass lediglich kleinere Bewegungen des Zielobjekts ausreichen, die Sensoreinheit 18 aktiviert zu lassen, auch wenn in einem Ausschalt- bzw. Nicht-Aktivierungszustand der Leuchtmittel 11 ansonsten eine derartigegeringe -- Bewegung keine Aktivierung ausgelöst hätte.

Die Konsequenz ist ein aus Nutzersicht natürlicheres und bedarfsgerechtes Schaltverhalten, insbesondere führt ein (temporäres) Wenig-Bewegen im Erfassungsbereich (links von E1) selbst dann zu keiner Deaktivierung nach einem Ende der Mindest-Einschaltdauer, wenn der entsprechende Bewegungshub ansonsten für eine Bewegungsdetektion durch die Sensoreinheit 18 nicht ausreichend ist.

Die Fig. 1 zeigt zusätzlich eine manuell betätigbare Einstelleinheit 22, mit welcher das gezeigte Erweitern des Erfassungs- bzw. Empfindlichkeitsbereichs (E1 auf E2 in Fig. 1) einstell- bzw. beeinflussbar ist. Dabei ist es einerseits möglich, etwa den Veränderungshub (also ein Maß der Erweiterung bzw. Vergrößerung des Erfassungsbereichs bzw. der Empfindlichkeit) durch geeignete, z.B. manuelle Einstellung geeignet vorzuwählen. Alternativ ist es denkbar, etwa gezielt und in Ergänzung zum typischerweise mittels der Einheit 20 auch schon konventionell vorwählbaren Erfassungsbereich (E1) den zweiten, erweiterten Erfassungsbereich (E2) gezielt vorzugeben.

Die vorliegende Erfindung ist nicht auf das beschriebene Ausführungsbeispiel beschränkt. So ist es beispielsweise möglich und von der Erfindung umfasst, alternative Sensormittel, etwa IR-Sensoren, Sensorgruppen oder ähnliches vorzugeben. Auch ist die vorliegende Erfindung nicht etwa auf die Beleuchtungssteuerung beschränkt, auch wenn hier ein wesentlicher, wertschöpfender Einsatzbereich liegen dürfte. Vielmehr wird die vorliegende Erfindung günstig für all jene Anwendungsfälle zu benutzen sein, bei welchen mit geringem Aufwand (und insbesondere beim Vermeiden des Einsatzes eines Anwesenheitssensors) eine Bewegungserfassung von lediglich geringen Bewegungen während eines Aktivierungszeitraums durch Sensormittel erfolgen soll.

## Patentansprüche

1. Bewegungssensorgesteuerte Leuchtenvorrichtung mit einer Leuchtmittel (10) aufweisenden Beleuchtungseinheit (11) sowie mit der Beleuchtungseinheit (11) zusammenwirkenden Sensormitteln (14, 18), die zum Erfassen einer bevorzugt menschlichen Bewegung in einem Erfassungsbereich (19) sowie zum Aktivieren der Beleuchtungseinheit als Reaktion auf eine erfasste Bewegung ausgebildet sind, wobei die Sensormittel Einstellmittel (20, 16) zum Vorbestimmen und/oder Ändern des Erfassungsbereichs (19) aufweisen, und die Einstellmittel (16) so ausgebildet sind, dass als Reaktion auf das Aktivieren der Beleuchtungseinheit (11) der Erfassungsbereich (19) und/oder eine Ansprechempfindlichkeit durch ein gesteuertes Verändern von Sensorparametern der Sensormittel (14, 18) erweitert und/oder vergrößert wird, **gekennzeichnet durch** bevorzugt manuell betätigbare oder beeinflussbare Leuchtdauer-Einstellmittel (20), die zum Vorgeben einer minimalen Einschaltdauer der Beleuchtungseinheit (11) als Reaktion auf das Aktivieren eingerichtet sind und so mit den Einstellmitteln zusammenwirken, dass eine innerhalb eines vorbestimmten Zeitbereichs eingestellte oder ausgewählte Einschaltdauer **durch** die Leuchtdauer-Einstellmittel (20) ein Ausmaß der Erweiterung bzw. Vergrößerung des Erfassungsbereichs (19) beeinflusst.

2. Vorrichtung nach Anspruch 1, **dadurch gekennzeichnet, dass** die Einstellmittel (16) so ausgebildet sind, dass das Erweitern und/oder Vergrößern des Erfassungsbereichs bzw. der Ansprechempfindlichkeit automatisch und ohne manuellen Eingriff erfolgt.

3. Vorrichtung nach Anspruch 1 oder 2, **dadurch gekennzeichnet, dass** die Einstellmittel (16) so ausgebildet sind, dass sie in einem deaktivierten Zustand der Beleuchtungseinheit (11) eine erste, einem kürzeren und/oder engeren Erfassungsbereich (E1) vor den Sensormitteln entsprechende Erfassungsschwelle für die Sensormittel einstellen und in einem aktivierten Zustand der Beleuchtungseinheit eine zweite, einem gegenüber dem kürzeren bzw. engeren Erfassungsbereich vergrößerten Erfassungsbereich vor den Sensormitteln entsprechende Erfassungsschwelle für die Sensormittel einstellen.

4. Vorrichtung nach Anspruch 3, **dadurch gekennzeichnet, dass** die Erfassungsschwelle mittels einer Empfindlichkeitsschwelle der Sensormittel realisiert ist.

5. Vorrichtung nach einem der Ansprüche 1 bis 4, **dadurch gekennzeichnet, dass** die Sensormittel einen auf Hochfrequenz- und/oder Mikrowellenbasis wirkenden Bewegungssensor (18) aufweisen.

6. Vorrichtung nach einem der Ansprüche 1 bis 5, **dadurch gekennzeichnet, dass** die Sensormittel einen auf Infrarotbasis wirkenden Bewegungssensor, insbesondere Passiv-Infrarotsensor, aufweisen.

7. Vorrichtung nach einem der Ansprüche 1 bis 6, **dadurch gekennzeichnet, dass** die Einstellmittel eine manuell betätigbare Einstelleinheit (22) aufweisen, die zum Vorgeben eines ursprünglichen sowie des erweiterten bzw. vergrößerten Einstellbereichs, und/oder zum Vorgeben eines Ausmaßes der Erweiterung bzw. Vergrößerung des Erfassungsbereichs, ausgebildet ist.

8. Bewegungssensorvorrichtung zum Aktivieren einer
Beleuchtungsvorrichtung und/oder einer Alarmvorrichtung, aufweisend Sensormittel (14, 18), die zum Erfassen einer bevorzugt menschlichen Bewegung in einem Erfassungsbereich (19) vor der Bewegungssensorvorrichtung sowie zum Erzeugen eines elektronischen Aktivierungssignals für eine nachschaltbare Beleuchtungs- oder Alarmvorrichtung als Reaktion auf eine erfasste Bewegung ausgebildet sind, wobei die Sensormittel Einstellmittel (20, 16) zum Vorbestimmen und/oder Ändern des Erfassungsbereichs (19) aufweisen und die Einstellmittel (16) so ausgebildet sind, dass als Reaktion auf das Erzeugen des elektronischen Aktivierungssignals der Erfassungsbereich (19) durch ein gesteuertes Verändern von Sensorparametern der Sensormittel (14, 18), insbesondere einer Sensor- und/oder Ansprechempfindlichkeit der Sensormittel (14, 18), erweitert und/oder vergrößert wird, **gekennzeichnet durch** bevorzugt manuell betätigbare oder beeinflussbare Leuchtdauer-Einstellmittel (20), die zum Vorgeben einer minimalen Einschaltdauer der Beleuchtungseinheit (11) als Reaktion auf das Aktivieren eingerichtet sind und so mit den Einstellmitteln (20, 16) zusammenwirken, dass eine innerhalb eines vorbestimmten Zeitbereichs eingestellte oder ausgewählte Einschaltdauer **durch** die Leuchtdauer-Einstellmittel (20) ein Ausmaß der Erweiterung bzw. Vergrößerung des Erfassungsbereichs (19) beeinflusst.

9. Verwendung der Vorrichtung nach einem der Ansprüche 1 bis 8 zur Beleuchtungssteuerung in einem Innenraum, insbesondere für ein Sanitär- und/oder Funktionsraum.

## Claims

1. A lighting device controlled by movement sensors, with a lighting unit (11) having lighting means (10), and also with sensor means (14, 18) interacting with the lighting unit (11); the latter are designed to register a preferably human movement in a registration zone (19), and also to activate the lighting unit as a reaction to a registered movement, wherein
the sensor means have means of adjustment (20, 16) for the predetermination and/or alteration of the registration zone (19), and the means of adjustment (16) are designed such that as a reaction to the activation of the lighting unit (11) the registration zone (19) and/or a response sensitivity are expanded and/or enhanced by a controlled alteration of sensor parameters of the sensor means (14, 18),
**characterised by**
means of adjustment (20) for the lighting duration that can preferably be actuated or influenced manually; the latter are equipped to specify a minimum switch-on duration for the lighting unit (11) as a reaction to the activation, and interact with the means of adjustment such that a switch-on duration adjusted or selected within a predetermined time period by the lighting duration means of adjustment (20) influences a dimension for the expansion, i.e. enhancement, of the registration zone (19).

2. The device in accordance with Claim 1,
**characterised in that**,
the means of adjustment (16) are designed such that the expansion and/or enhancement of the registration zone or the response sensitivity are undertaken automatically and without manual intervention.

3. The device in accordance with Claim 1 or 2,
**characterised in that**,
the means of adjustment (16) are designed such that in a deactivated state of the lighting unit (11) they adjust to a registration threshold for the sensor means corresponding to a first, a shorter and/or narrower registration zone (E1) in front of the sensor means, and in an activated state of the lighting unit adjust to a second registration zone, enhanced compared with the registration threshold for the sensor means corresponding with the shorter or narrower registration zone, in front of the sensor means.

4. The device in accordance with Claim 3,
**characterised in that**,
the registration threshold is implemented by means of a sensitivity threshold for the sensor means.

5. The device in accordance with one of the Claims 1 to 4,
**characterised in that**,
the sensor means have a movement sensor (18) acting on the basis of high-frequency waves and/or microwaves.

6. The device in accordance with one of the Claims 1 to 5,
**characterised in that**,
the sensor means have a movement sensor (18) acting on an infrared basis, in particular a passive infrared sensor.

7. The device in accordance with one of the Claims 1 to 6,
**characterised in that**,
the means of adjustment have an adjustment unit (22) that can be manually actuated, which is designed for the specification of an original and also the expanded i.e. enhanced adjustment zone, and/or for the specification of a dimension for the expansion, i.e. enhancement, of the registration zone.

8. A movement sensor device for the actuation of a lighting device and/or an alarm device, having sensor means (14, 18); the latter are designed to register a preferably human movement in a registration zone (19) in front of the movement sensor device, and also to generate an electronic activation signal for a lighting device or an alarm device that can be connected downstream as a reaction to a registered movement, wherein
the sensor means have means of adjustment (20, 16) for the predetermination and/or alteration of the registration zone (19), and the means of adjustment (16) are designed such that as a reaction to the generation of the electronic activation signal the registration zone (19) is expanded and/or enhanced by a controlled alteration of the sensor parameters of the sensor means (14, 18), in particular by a sensor and/or response sensitivity of the sensor means,
**characterised by**
means of adjustment (20) for the lighting duration that can preferably be actuated or influenced manually; the latter are equipped for the specification of a minimum switch-on duration for the lighting unit (11) as a reaction to the activation, and interact with the means of adjustment (20, 16) such that a switch-on duration adjusted or selected within a predetermined time period by the lighting duration means of adjustment (20) influences a dimension for the expansion, i.e. increase, of the registration zone (19).

9. An application of the device in accordance with one of the Claims 1 to 8 for the lighting control in an interior space, in particular for a washroom and/or a function room.

## Revendications

1. Dispositif d'éclairage commandé par capteur de mouvement comprenant une unité d'éclairage (11) comportant des moyens lumineux (10) ainsi que des moyens à capteurs (14, 18) coopérant avec l'unité d'éclairage (11), qui sont conçus pour détecter de préférence un mouvement humain dans une zone de détection (19) et pour activer l'unité d'éclairage en réaction à un mouvement détecté, dans lequel les moyens à capteurs comprennent des moyens de réglage (20, 16) destinés à prédéfinir et/ou modifier la zone de détection (19) et les moyens de réglage (16) sont conçus de manière à ce qu'en réaction à l'activation de l'unité d'éclairage (11), la zone de détection (19) et/ou une sensibilité de réponse soit étendue et/ou augmentée par une modification commandée de paramètres des capteurs des moyens à capteurs (14, 18), **caractérisé par** des moyens de réglage (20) de la durée d'éclairage pouvant de préférence être actionnés ou influencés manuellement, qui sont conçus pour prédéfinir une durée de fonctionnement minimale de l'unité d'éclairage (11) en réaction à l'activation et coopèrent avec les moyens de réglage de telle manière qu'une durée de fonctionnement réglée ou sélectionnée par les moyens de réglage (20) de la durée d'éclairage à l'intérieur d'un intervalle de temps prédéterminé agisse sur le degré d'extension ou d'augmentation de la zone de détection (19).

2. Dispositif selon la revendication 1, **caractérisé en ce que** les moyens de réglage (16) sont conçus de manière à ce que l'extension et/ou l'augmentation de la zone de détection ou de la sensibilité de réponse s'effectue automatiquement et sans intervention manuelle.

3. Dispositif selon la revendication 1 ou 2, **caractérisé en ce que** les moyens de réglage (16) sont conçus de manière à régler, dans un état désactivé de l'unité d'éclairage (11), un premier seuil de détection des moyens à capteurs, correspondant à une zone de détection (E1) plus courte et/ou plus étroite devant les moyens à capteurs et, dans un état activé de l'unité d'éclairage, pour régler un deuxième seuil de détection des moyens à capteurs, correspondant à une zone de détection augmentée par rapport à la zone de détection plus courte ou plus étroite devant les moyens à capteurs.

4. Dispositif selon la revendication 3, **caractérisé en ce que** le seuil de détection est mis en oeuvre au moyen d'un seuil de sensibilité des moyens à capteurs.

5. Dispositif selon l'une quelconque des revendications 1 à 4, **caractérisé en ce que** les moyens à capteurs comprennent un capteur de mouvement (18) fonctionnant sur la base d'ondes à haute fréquence et/ou de microondes.

6. Dispositif selon l'une quelconque des revendications 1 à 5, **caractérisé en ce que** les moyens à capteurs comprennent un capteur de mouvement fonctionnant à base d'infrarouge, notamment un capteur à infrarouge passif.

7. Dispositif selon l'une quelconque des revendications 1 à 6, **caractérisé en ce que** les moyens de réglage comprennent une unité de réglage (22) pouvant être actionnée manuellement, qui est conçue pour prédéfinir une plage de réglage initiale ainsi que la plage de réglage étendue ou augmentée, et/ou pour prédéfinir un degré d'extension ou d'augmentation de la zone de détection.

8. Dispositif à capteur de mouvement destiné à activer un dispositif d'éclairage et/ou un dispositif d'alarme, comprenant des moyens à capteurs (14, 18) qui sont conçus pour détecter de préférence un mouvement humain dans une zone de détection (19) devant le dispositif à capteur de mouvement ainsi que pour générer un signal d'activation électronique destiné à un dispositif d'éclairage ou d'alarme pouvant être connecté en aval, en réaction à un mouvement détecté, dans lequel les moyens à capteurs comprennent des moyens de réglage (20, 16) destinés à prédéfinir et/ou modifier la zone de détection (19) et les moyens de réglage (16) sont conçus de manière à étendre et/ou augmenter la zone de détection (19) par une modification commandée de paramètres des capteurs des moyens à capteurs (14, 18), notamment une sensibilité de capteur et/ou de réponse des moyens à capteurs (14, 18) en réaction à la génération du signal d'activation électronique, **caractérisé par** des moyens de réglage (20) de la durée d'éclairage pouvant de préférence être actionnés ou influencés manuellement, qui sont conçus pour prédéfinir une durée de fonctionnement minimale de l'unité d'éclairage (11) en réaction à l'activation et qui coopèrent avec les unités de réglage (20, 16) de manière à ce qu'une durée de fonctionnement réglée ou sélectionnée à l'intérieur d'un intervalle de temps prédéfini influence par l'intermédiaire des moyens de réglage (20) de la durée d'éclairage un degré d'extension ou d'augmentation de la zone de détection (19).

9. Utilisation du dispositif selon l'une quelconque des revendications 1 à 8, pour commander un éclairage dans un espace intérieur, notamment dans un espace sanitaire et/ou fonctionnel.
